# EUROPÄISCHE PATENTSCHRIFT

(11) **EP 1 716 292 B1**
(45) Veröffentlichungstag und Bekanntmachung des Hinweises auf die Patenterteilung: **24.10.2007**
(21) Anmeldenummer: 05701127.2
(22) Anmeldetag: 22.01.2005
(51) Int. Cl.: E01F 8/00, F16F 1/12

(54) **FEDERUNTERSTÜTZTE AUFHÄNGUNG FÜR LÄRMSCHUTZELEMENTE**
SPRING-SUPPORTED SUSPENSION FOR NOISE INSULATION ELEMENTS
SUSPENSION A RESSORT POUR ELEMENTS ANTIBRUIT

(30) Priorität: 09.02.2004 DE 102004006359
(43) Veröffentlichungstag der Anmeldung: 02.11.2006
(73) Patentinhaber: Röhm GmbH, 64293 Darmstadt (DE)
(72) Erfinder: SEELMANN, Peter, A-1238 Wien (AT); PETSCHNIG, Martin, A-2542 Kottingbrunn (AT)
(86) Internationale Anmeldenummer: PCT/EP2005/000623
(87) Internationale Veröffentlichungsnummer: WO 2005/075744

(56) Entgegenhaltungen:
- EP-A- 0 908 563
- DE-A1- 2 414 415
- DE-A1- 19 911 508
- US-A- 4 712 778

## Beschreibung

Die Erfindung betrifft eine Aufhängevorrichtung für Lärmschutzelemente. Die Lärmschutzelemente werden mit Hilfe der Aufhängevorrichtung an der Tragekonstruktion befestigt und bilden gemeinsam mit der Tragekonstruktion und gegebenenfalls einem Sockel die Lärmschutzwand.

Die Lärmschutzelemente können beispielsweise aus Einscheibensicherheitsglas (ESG), aus Verbundsicherheitsglas (VSG), aus Kunststoffen, wie beispielsweise Polyvinylchlorid (PVC) oder recyceltem PVC, aus Verbundmaterialien, wie beispielsweise aus Laminaten aus Aluminium und PVC bestehen.
Die Lärmschutzelemente können schallabsorbierend oder schallreflektierend ausgelegt sein. Zu diesem Zweck können die Lärmschutzelemente auch mit schallabsorbierenden Materialien gefüllt sein. Die Lärmschutzelemente können sowohl transparent als auch transluzent sowie undurchsichtig ausgeführt sein. Die transparenten Lärmschutzelemente können beispielsweise aus gegossenem oder extrudiertem Acrylglas bestehen. Das Acrylglas kann auch eingefärbt, mit Markierungen gegen Vogelflug oder mit Verstärkungselementen versehen sein.

Als Werkstoff für die Lärmschutzelemente können ferner alle geeigneten transparenten, opaken oder undurchsichtige Kunststoffe verwendet werden, wie beispielsweise neben Polymethyl(meth)acrylat auch Polycarbonat (PC) oder Polyethylenterephthalat (PET).

Die Lärmschutzelemente aus Acrylglas werden von der Röhm GmbH & Co. KG unter dem Namen PLEXIGLAS^{®}-Soundstop in den Handel gebracht.

Immer öfter tritt die Forderung einer rahmenlosen Aufhängung für transparente Lärmschutzelemente aus Acrylglasplatten auf. Diese, in Folge als Punktaufhängung bezeichnet, bietet neue Gestaltungsmöglichkeiten und erfüllt gleichzeitig eine Vielzahl von statischen, dynamischen und funktionellen Aufgaben. Viele dieser Aufgaben werden von herkömmlichen Punktaufhängungen, wie sie beispielsweise bei Glasbefestigungen verwendet werden, nicht erfüllt.

### Stand der Technik

Derzeit sind punktförmige Befestigungen für Plattenelemente am Markt erhältlich, die jeweils aus zwei Gelenken aufgebaut sind. Dies können Drehgelenke oder Kugelgelenke sein. Die Freiheitsgrade eines Gelenks liegen jeweils in der Belastungsrichtung des Nachbargelenks. Dadurch ergibt sich die Situation, dass immer nur ein Teil der Gelenke in einer bestimmten Richtung Lasten aufnehmen können. Somit erhält man eine unsymmetrische Belastung der Plattenelemente und der Unterkonstruktion. Die Punktaufhängungen müssen so dimensioniert werden, dass sie dieser statischen und dynamischen Belastung Stand halten. Dies bedeutet, dass die Bauteile unverhältnismäßig groß sind. Da dies in der Praxis nicht akzeptabel ist, wurde bisher die Hauptgewichtskraft über linienförmige Auflager abgeleitet.

Starre Befestigungen stellen eine elegante und preiswerte Befestigung von Plattenelementen dar. Sie sind jedoch nur bei sehr kleinen Anwendungen und bei geringen Temperaturschwankungen, also in klimatisierten Räumen, anwendbar. Das größte Problem ist die Wärmeausdehnung, die aufgrund des Hook'schen Gesetzes (Hook'sches Gesetz o' = E* ε), oft unzulässige Spannungen im Plattenelement oder in der Unterkonstruktion hervorruft.

Bei der Entwicklung von transparenten Lärmschutzwänden lässt sich ein Trend zur rahmenlosen Aufhängung feststellen. Diese architektonischen Entwürfe fordern fast ausschließlich eine punktförmige Befestigung der Lärmschutzelemente.

Punktförmige Befestigungen für Lärmschutzelemente sind beispielsweise in der EP 0 908 563 beschrieben, ein Lärmschutzwandsegment (LS-Segment) mit mindestens einer Lärmschutzplatte (LS-Platte) aus Kunststoff ist mit wenigstens einem Mittel zur Befestigung der Platte an einem Träger versehen, wobei die Platte gelenkig punktförmig so gelagert ist, dass eine unter Last resultierende Biegelinie der Platte durch das Befestigungsmittel begleitbar ist.

Vorzugsweise weist das Befestigungsmittel einen mit einem Ende am Träger verankerbaren Bolzen auf, der mit seinem anderen Ende durch eine in der Platte vorgesehene Ausnehmung sowie wenigstens je ein beiderseitig der Plattenaußenflächen in enger Anschmiegung damit angeordnete Scheibenelemente hindurchgreift, wobei in der Ausnehmung ein elastisches Federelement angeordnet ist, dessen Höhe größer als die Dicke der zu befestigenden Platte ist und wobei der Bolzen in den Scheibenelementen kugelig gelagert ist.

Aus dem DE-U 85 24 319.1 bzw. EP-A-0 213 521 sind Verglasungssprossen zur Errichtung von Lärmschutzwänden, die großflächigen Scheiben aus durchsichtigem Kunststoff zwischen senkrechten Pfosten enthalten, bekannt geworden, die in etwa den Eingangs genannten Trägern entsprechen. Anstelle eines Doppel-T-Trägers kann bei diesen Systemen auch ein Vierkantrohr verwendet werden, das hinsichtlich seiner Abmessungen dem Doppel-T-Träger entspricht. Die einzelnen Platten werden mit Abstand voneinander auf eine der Seitenflächen des Vierkantrohres aufgelegt und mittels einer Klemmschiene und einer entsprechenden Anzahl von Schrauben durch die Lücke zwischen den einzelnen Platten gegen das Vierkantrohr geklemmt. Die Konstruktion ist hinreichend windstabil, benötigt jedoch hierfür verhältnismäßig breite Vierkantrohre.

Abhilfe hierfür liefert beispielsweise die EP-A-0 530 512. Hierin wird ein Plattensystem offenbart, in welchem Kunststoffplatten nicht mit Abstand auf Stoß oder im wesentlichen außerhalb der Trägerauflagefläche überlappend verlegt sind, sondern einander teilweise überlappend durch die Überlappung und die Auflagefläche am Träger hindurch mit dem Träger verankert sind. Hierdurch kann die erforderliche Trägerbreite ohne Beeinträchtigung der Stabilität in etwa halbiert werden. Obwohl dies insbesondere für Wandsysteme und speziell bei durchsichtigen Lärmschutzwänden einen optisch gefälligeren Eindruck ergibt, da die Träger schlank sind und nicht mehr wie bisher plump wirken, macht die aus der EP-A-0 530 512 bekannte Technik immer noch relativ geringe Pfostenabstände von etwa 2 Metern sowie eine Führung der Platten über die gesamte Höhe von bis zu 3 Metern notwendig.

### Aufgabe

Es bestand die Aufgabe, eine weitere rahmenlose Aufhängung für Lärmschutzelemente aus Acrylglasplatten und andere Lärmschutzelemente zu entwickeln. Eine weitere Aufgabe besteht darin, eine Befestigungsvorrichtung für Lärmschutzelemente aus Acrylglas zu entwickeln, die es ermöglicht, Kräfte aus allen Richtungen über die Befestigungsvorrichtung in die Tragekonstruktion einzuleiten. Ebenso soll die Befestigung in der Lage sein, die thermische Längenänderung aufzunehmen.

Weiter soll die Befestigungsvorrichtung einfach und billig herzustellen und zu montieren sein.
Um zu vermeiden, dass bei dynamischen Lastwechseln (Windlasten) Aufschaukelphänomene auftreten, soll die Eigenfrequenz des Systems aus Lärmschutzelement, Aufhänge- oder Befestigungsvorrichtung und Tragekonstruktion über 0,5 Hz liegen.
Eine Hauptforderung ist die Aufnahme der Lasten in allen Richtungen, wobei es zu einer gleichmäßigen Aufteilung auf alle Lastaufnahmepunkte kommen soll. Daraus leitet sich die Notwendigkeit einer hohen Flexibilität der Befestigungspunkte ab.
Ferner sollen an der Oberfläche ausschließlich die Befestigungspunkte optisch erkennbar sein. Zusätzliche Fangsicherungen beispielsweise durch Stahlseile stellen meist eine ungewollte optische Störung dar.

### Lösung

Gelöst wird die erfindungsgemäße Aufgabe durch eine federgestützte Aufhängung nach Anspruch 1.

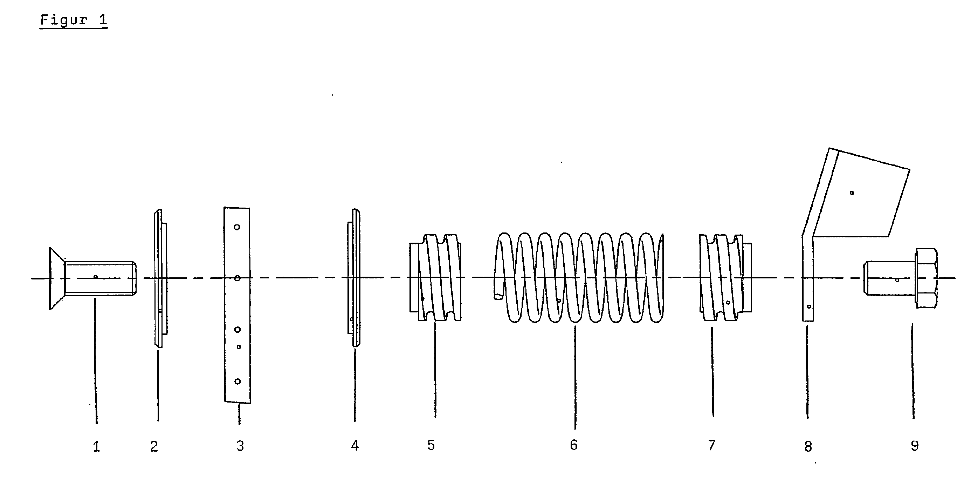

Die Vorrichtung beinhaltet bevorzugt eine federunterstützte Aufhängung für Lärmschutzelemente aus Acrylglas, beispielsweise aus einer Spiralfeder (6), die auf eine (Figur 1, Nr. 5, 7) mit einem Gewinde versehene Federaufnahme geschraubt wird.

Dadurch wird erreicht, dass die Spiralfeder (Figur 1, Bezugszeichen 6) unverschiebbar fixiert ist und im Falle eines Bruchs des Lärmschutzelements durch Fremdeinwirkung keine kleinen Teile mit hoher kinetischer Energie unkontrolliert herumfliegen. Dieser Effekt hat ferner zur Folge, dass eine gesonderte Fangsicherung in Form eines optisch störenden Stahlseils überflüssig wird.

Weitere Elemente der federgestützten Aufhängung für Lärmschutzelemente sind der an der Tragekonstruktion befestigte Träger (Fig. 1, Nr. 8). Der Träger kann auch als Riegel bezeichnet werden und wird in der statisch erforderlichen Anzahl in den berechneten Abständen an der Tragekonstruktion angeordnet

Mit Hilfe der Schraube (9) wird der erste Teil der Federaufnahme (7) an der Aufhängevorrichtung (8) befestigt. Der erste Teil der Federaufnahme (7) kann mittels aller üblichen Befestigungstechniken an der Aufhängervorrichtung befestigt werden, beispielsweise durch Schweißen, Nieten, Schrauben, Klemmen oder Kleben.

Die Federaufnahmen (7 und 5) bestehen aus zwei Stücken und sind so bemessen, dass ca. 3 - 5 Windungen der Feder (6) frei bleiben. Die freien Windungen der Spiralfeder sorgen für die elastische Aufhängung der Lärmschutzelemente.

Die Federaufnahmen (7, 5) weisen auf ihrer Außenseite Rillen auf, in die die Feder form- und kraftschlüssig eingreift.

Die Federaufnahmen (7, 5) sind beispielsweise aus Stahl, glasfaserverstärktem Kunststoff oder Kunststoff gefertigt.

Die Feder (6) besteht beispielsweise aus einem Stahldraht. Ferner kann die Feder aus Kunststoff, wie beispielsweise Polypropylen oder Polyethylen, Gummi, Holz, Aluminium, Edelstahl oder mineralischen Werkstoffen, Metalllegierungen, wie beispielsweise Messing, Bronze oder Gußeisen gefertigt sein.

Die Feder kann auch als Stabfeder aus den geeigneten vorstehenden Materialien ausgeführt sein.

Die Steifigkeit der Feder in Längsrichtung liegt beispielsweise bei ca. 10.000 N/m - 25.000 N/m. Die Steifigkeit der Feder in Querrichtung liegt beispielsweise bei 50.000 N/m - 10.000 N/m. Die Federelemente können ferner auch so ausgestaltet werden, dass sie keine lineare Kennlinie nach dem Hook'schen Gesetz, sondern eine progressive Kennlinie aufweisen. Man erreicht dies bei Spiralfedern durch konische Wicklung oder durch variable Steigungen.

Die erfindungsgemäße Aufhängung kann auch zur Befestigung von Fassadenelementen und Verkleidungen aus den vorgenannten Werkstoffen verwendet werden.

Die Lage des Befestigungselements im Raum hat keinen Einfluss auf die Funktion: Überkopfbefestigung ist ebenso möglich wie Bodenbefestigung oder horizontale Befestigung. Es können sowohl gerade als auch gebogene Elemente befestigt werden.

### Beispiel 1

Zerstörende Beanspruchung der federgestützten Aufhängungen der Lärmschutzelemente aus Acrylglas.

Eine Acrylglasplatte des Typs PLEXIGLAS^{®}-Soundstop mit den Abmessungen 2.000 x 2.000 x 15 mm (L x B x Dicke) wurde dem Pendelbruchversuch nach EN 1794-2 (April 2003) unterworfen.

Das Gesamtelement (Lärmschutzelemente und erfindungsgemäße Aufhängungen) wurde untersucht. Die Feder wies eine Steifigkeit von 19.000 N/m auf.

Der Lochdurchmesser im Lärmschutzelement (Befestigungsbohrung) wies einen Durchmesser von 65 mm auf. Auf der Plattenaußenseite war die Befestigungsbohrung zusätzlich noch mit einer Eindrehung von 80 mm Durchmesser und 3 mm Tiefe versehen.

### Ergebnis

Keiner der Aufhängungspunkte hatte sich von der Acrylglasplatte gelöst. Von den Bohrungen der Aushängepunkte in der Acrylglasplatte gingen keine Bruchlinien aus.
Die Federn haben sich plastisch verformt, ohne dass Brüche oder Risse auftraten. Die plastische Verformung der Federn hat erheblich zum Abbau der zugeführten Schlagenergie beigetragen.
Die zweiteilige Federaufnahme (Figur 1, Nr. 5, 7) löste sich in keinen Fall aus der Feder.

### Bewertung

Die erfindungsgemäße Aufhängung eignet sich als Fangsicherung für die zu Bruch gegangene Acrylglasplatte.

### Figur 1

### Liste der Bezugszeichen

- 1: Schraube nach DIN 7991
- 2: Klemmscheibe I
- 3: Lärmschutzelement, PLEXIGLAS^{®}-Soundstop
- 4: Klemmscheibe II
- 5: Federaufnahme I
- 6: Feder
- 7: Federaufnahme II
- 8: Aufhängevorrichtung
- 9: Schraube nach DIN 933

## Patentansprüche

1. Federgestützte Aufhängung für Lärmschutzelemente, mit
- einer Feder (6)
- zwei Federaufnahmen (5, 7)
wobei die eine Federaufnahme (7) an der Aufhängevorrichtung (8) befestigt ist und die Feder (6) auf die erste Federaufnahme (7) aufgeschraubt ist, die zweite Federaufnahme (5) mittels Klemmscheiben (2, 4) in einer Bohrung des Lärmschutzelements (3) befestig bar ist und so weit in die Feder (6) eingeschraubt wird, dass cirka 3 Umläufe der Feder (6) frei bleiben.

2. Aufhängung nach Anspruch 1,
**dadurch gekennzeichnet,**
**dass** die Steifigkeit der Feder (6) in Längsrichtung zwischen 10.000 N/m und 25.000 N/m liegt.

3. Lärmschutzwand, bestehend aus einem an sich bekannten Sockel einer an sich bekannten Tragekonstruktion und Aufhängungen,
**dadurch gekennzeichnet,**
**dass** die Lärmschutzelemente mittels der federgestützten Aufhängung nach Anspruch 1 befestigt sind.

## Claims

1. Spring-supported suspension means for noise protection elements, having
- a spring (6)
- two spring mounts (5, 7)
one spring mount (7) being secured on the suspension device (8) and the spring (6) being screwed onto the first spring mount (7), the second spring mount (5) being able to be secured in a hole of the noise protection element (3) by means of clamping discs (2, 4) and being screwed into the spring (6) to an extent such that approx. 3 revolutions of the spring (6) remain free.

2. Suspension means according to Claim 1, **characterized in that** the stiffness of the spring (6) in the longitudinal direction is between 10 000 N/m and 25 000 N/m.

3. Noise barrier comprising a base, which is known per se, of a supporting structure which is known per se, and suspension means, **characterized in that** the noise protection elements are secured by means of the spring-supported suspension means according to Claim 1.

## Revendications

1. Suspension à ressort pour des éléments antibruit, avec
- un ressort (6)
- deux éléments récepteurs de ressort (5, 7)
l'un des éléments récepteurs de ressort (7) étant fixé sur le dispositif de suspension (8) et le ressort (6) étant vissé dans le premier élément récepteur de ressort (7), le deuxième élément récepteur de ressort (5) pouvant être fixé au moyen de disques de serrage (2, 4) dans un alésage de l'élément antibruit (3) et étant vissé dans le ressort (6) en laissant libre environ 3 boucles du ressort (6).

2. Suspension selon la revendication 1,
**caractérisée en ce que**
la rigidité du ressort (6) dans la longueur se situe entre 10 000 N/m et 25 000 N/m.

3. Paroi antibruit, constituée d'un socle classique d'une structure porteuse classique et de suspensions,
**caractérisée en ce que**,
les éléments antibruit sont fixés au moyen de la suspension à ressort selon la revendication 1.
